# EUROPEAN PATENT APPLICATION

(11) **EP 4 567 909 A1**
(43) Date of publication of application: **11.06.2025**
(21) Application number: 24208347.5
(22) Date of filing: 23.10.2024
(51) Int. Cl.: H01M 4/04, H01M 4/13, H01M 4/139, H01M 4/62

(54) **FIBRILLATED FLUFFY POWER, METHOD OF MANUFACTURING THE SAME, AND LITHIUM-ION BATTERY TECHNICAL FIELD**

(30) Priority: 30.10.2023 CN 202311429550; 07.12.2023 WO PCT/CN2023/137285
(71) Applicant: Eve Energy Co., Ltd., Huizhou, Guangdong 516006 (CN)
(72) Inventor: JIA, Qiang, Huizhou, Guangdong, 516006 (CN); JI, Yajuan, Huizhou, Guangdong, 516006 (CN); ZHAO, Linyan, Huizhou, Guangdong, 516006 (CN); ZHOU, Siqiuyue, Huizhou, Guangdong, 516006 (CN)
(74) Representative: Herrero & Asociados, S.L.

(57) **Abstract**

A method of manufacturing fibrillated fluffy powder includes: performing (S 110) a first mixing to mix an active material and a conductive agent to obtain a first mixture; adding (S120) a first binder to the first mixture, performing a second mixing on the first binder and the first mixture to obtain a second mixture; adding (S130) a second binder solution to the second mixture, performing a third mixing on the second binder solution and the second mixture to obtain a third mixture; and performing (S140) a fourth mixing on the third mixture, heating the mixed third mixture to obtain the fibrillated fluffy powder.

## Description

### TECHNICAL FIELD

The present disclosure relates to the field of lithium-ion batteries, and in particular to a fibrillated fluffy power, a method of manufacturing the fibrillated fluffy power, and a lithium-ion battery.

### BACKGROUND

A lithium-ion power battery is substantially applied for vehicles arranged with a lithium-ion power battery and for energy storage. A lithium-ion battery having a high energy density and a high power may be obtained by using new materials and performing new processes, which is an important research and development direction.

During research and development, no solvent or a small amount of solvent is used for the dry-process electrode technology, and therefore, the dry-process electrode technology has advantages of having a reduced cost, compared to wet processes. In addition, thicker electrodes may be obtained by performing the dry-process electrode technology, and an electrode sheet is not limited to a crack thickness of coating.

When performing the dry process to prepare electrodes, fibrillation after dry powder being mixed is an important step during the process. In the related art, material and airflow mixing is achieved by high rotation speeds, and one smashing is performed to achieve fibrillation of dry-process electrode powder. In this process, a mixing device needs to have a high shearing speed, and in this case, the device may be highly worn and torn, and a high energy consumption is generated. More importantly, a higher shearing strength may damage a structure of an active material, affecting electrochemical performance of the lithium-ion battery. However, a slightly lower shearing strength cannot achieve sufficient fibrillation, preparation requirements of the dry-process electrode cannot be met.

### SUMMARY OF THE DISCLOSURE

The present disclosure provides a fibrillated fluffy power portion, a method of manufacturing the fibrillated fluffy power portion, and a lithium-ion battery, so as to improve fibrillation of the power portion.

In a first aspect, the present disclosure provides a method of manufacturing fibrillated fluffy powder. The method includes: performing a first mixing to mix an active material and a conductive agent to obtain a first mixture; adding a first binder to the first mixture, performing a second mixing on the first binder and the first mixture to obtain a second mixture; adding a second binder solution to the second mixture, performing a third mixing on the second binder solution and the second mixture to obtain a third mixture; and performing a fourth mixing on the third mixture, heating the mixed third mixture to obtain the fibrillated fluffy powder.

In a second aspect, the present disclosure provides fibrillated fluffy powder, which is obtained by performing the method in the first aspect.

In a third aspect, the present disclosure provides a lithium-ion battery, including: an electrode film, which is made of the fibrillated fluffy powder in the second aspect.

According to the present disclosure, following technical effects can be achieved.
(1) The fibrillated fluffy powder manufactured in the present disclosure has better film-forming performance and ideal strength, and the strength of the fibrillated fluffy powder is 0.45Mpa.
(2) The method of manufacturing the fibrillated fluffy powder can be performed simply and easily, such that fibrillation of the powder is improved.
(3) The process of manufacturing the fibrillated fluffy powder has low requirements for devices, such that the devices can be less worn and torn.

### BRIEF DESCRIPTION OF THE DRAWINGS

FIG. 1 is a flow chart of a method of manufacturing a fibrillated fluffy powder.
FIG. 2 is a scanning electron microscope (SEM) view of the fibrillated fluffy powder obtained from the method in FIG. 1.

### DETAILED DESCRIPTION

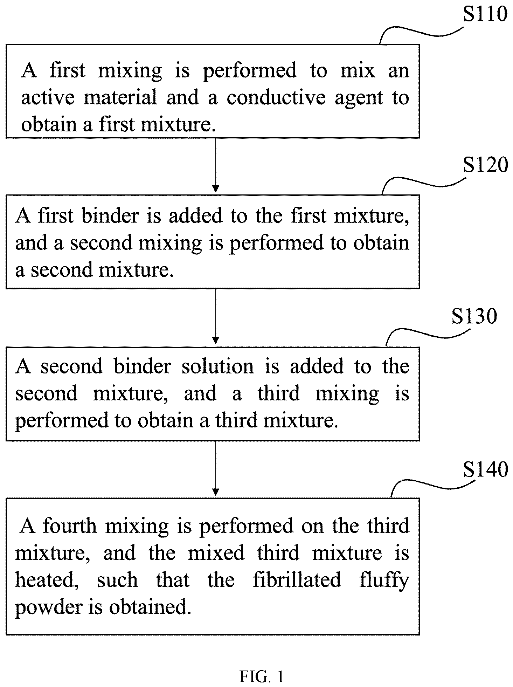

As shown in FIG. 1, embodiments of the present dislcosure provide a method of manufacturing a fibrillated fluffy powder. The method includes following operations.

In an operation S110, a first mixing is performed to mix an active material and a conductive agent to obtain a first mixture.

In an operation S120, a first binder is added to the first mixture, and a second mixing is performed to obtain a second mixture.

In an operation S130, a second binder solution is added to the second mixture, and a third mixing is performed to obtain a third mixture.

In an operation S140, a fourth mixing is performed on the third mixture, and the mixed third mixture is heated, such that the fibrillated fluffy powder is obtained.

In the present disclosure, in the operation S110, the first mixing is performed to mix the active material and the conductive agent, in this way, conductivity inside an electrode sheet is increased. The first binder in the present disclosure has a fibrillation performance. Two binders are added during mixing in the operations S120 and S130, such that the two binders are dispersed, the powder has different internal friction coefficients at different manufacturing stages. A non-fibrillated portion of the first binder can be fibrillated, and the second binder and the first binder may interact with each other. In the operation S140, the fourth mixing is performed on the third mixture, further improving fibrillation of the first binder. The powder is heated after being mixed, and the powder after being heated can form spiderwebs obviously. Most of the binders achieves a higher level of fibrillation.

The method of manufacturing the fibrillated fluffy powder of the present disclosure can be performed simply and easily, and fibrillation of the powder is improved. A rotation speed of a high-speed mixing device for the mixing operations is reduced, requirements for the mixing device are reduced, worn and torn to the mixing device are reduced, and energy consumption is reduced. The fibrillated fluffy powder obtained by the method of the present disclosure has better film-forming performance, and strength of the formed film is improved, and less powder may be fallen from the formed film.

In an embodiment, a mass ratio of the active material, the conductive agent, the first binder and a second binder in the second binder solution is (92.5 to 97.5):(0.1 to 1):(0.9 to 5):1.5. The mass ratio may be 92.5:1:5:1.5; or 93:1:4.5:1.5; or 94:0.5:4:1.5; or 95:1:2.5:1.5; or 96:0.5:2:1.5; or 97:0.1:1.4:1.5; or 97.5:0.1:0.9:1.5, and so on. Specific ratio numbers may not be limited to the above, other values within the above ratio range are equivalently applicable.

In an embodiment, the active material includes a positive-electrode active material or a negative-electrode active material.

In an embodiment, the negative-electrode active material includes any one or a combination of at least two of: graphite and a silicon-based material.

In an embodiment, the graphite includes any one or a combination of at least two of: natural graphite and artificial graphite.

In an embodiment, the silicon-based material includes any one or a combination of at least two of: a silicon-oxygen material and a silicon-carbon material.

In an embodiment, the positive-electrode active material includes any one of LFP, NCM or LiCoO3 or a combination of at least two thereof. Typical but non-limited examples of the combination are: a combination of LFP and NCM, a combination of NCM and LiCoO3, or a combination of LFP and LiCoO3 and so on.

In an embodiment, the conductive agent in S110 includes any one or a combination of at least two of: conductive carbon black, acetylene black, kochine black, graphite, carbon nanofibers, single-walled carbon nanotubes, multi-walled carbon nanotubes, and graphene. Typical but non-limited examples of the combination are: a combination of the conductive carbon black and the acetylene black, a combination of the kochine black and the graphite, a combination of the carbon nanofibers and the single-walled carbon nanotubes, a combination of the single-walled carbon nanotubes and the multi-walled carbon nanotubes, or a combination of the multi-walled carbon nanotubes and the graphene, and so on.

In an embodiment, the first mixing in the operation S110 is performed in a granulator. A rotation speed of a cutter of the granulator is in a range of 150 rpm to 3000 rpm. The rotation speed of the cutter may be: 150 rpm, 200 rpm, 300 rpm, 500 rpm, 700 rpm, 900 rpm, 1000 rpm, 1200 rpm, 1400 rpm, 1600 rpm, 1800 rpm, 2000 rpm, 2200 rpm, 2400 rpm, 2600 rpm, 2800 rpm, or 3000 rpm, so on. The rotation speed is not limited to the above values, and other values within the range are equivalently applicable. In some embodiments, the rotation speed of the cutter is in a range of 800 rpm to 1500 rpm.

In an embodiment, the first mixing in the operation S110 is performed in the granulator. A rotation speed of a scraper is in a range of 50 rpm to 300 rpm. The rotation speed of the scraper may be: 50 rpm, 80 rpm, 100 rpm, 120 rpm, 140 rpm, 160 rpm, 180 rpm, 200 rpm, 220 rpm, 240 rpm, 260 rpm, 280 rpm, or 300 rpm, and so on. The rotation speed is not limited to the above values, and other values within the range are equivalently applicable. In some embodiments, the rotation speed of the scraper is in a range of 150 rpm to 300 rpm.

In an embodiment, a time length for the first mixing is 1min to 60 min. The time length may be 1 min, 5 min, 10 min, 15 min, 20 min, 25 min, 30 min, 35 min, 40 min, 45 min, 50 min, 55 min, or 60 min, and so on. The time length is not limited to the above values, and other values within the range are equivalently applicable. In some embodiments, the time length of the first mixing is in a range of 10 min to 20 min.

In an embodiment, the first binder includes a polytetrafluoroethylene dispersion resin.

In the present disclosure, the polytetrafluoroethylene dispersion resin is used as the first binder. The polytetrafluoroethylene dispersion resin has the fibrillation performance. When a certain shearing strength or a certain temperature is applied, an original crystal structure of the polytetrafluoroethylene dispersion resin undergoes a phase transition, where primary particles are transformed into fibrous filaments. In the present application disclosure, by performing mixing on the first binder, the first binder is fibrillated, a surface state of the first binder is changed. Subsequently, the second binder is added and mixed, enabling the second binder to interact with the first binder.

In an embodiment, a time length for the second mixing in the operation S120 is in a range of 1 min to 20 min. The time length may be 1 min, 2 min, 4 min, 6 min, 8 min, 10 min, 12 min, 14 min, 16 min, 18 min, or 20 min, and so on. The time length is not limited to the above values, and other values within the range are equivalently applicable.

In an embodiment, the second mixing is performed in a mixer.

In an embodiment, a rotation speed of the second mixing is in a range of 1500 rpm to 45000 rpm. The rotation speed may be: 1500 rpm, 3000 rpm, 4500 rpm, 6000 rpm, 7500 rpm, 9000 rpm, 10500 rpm, 12000 rpm, 15000 rpm, 20000 rpm, 25000 rpm, 30,000 rpm, 35,000 rpm, 40,000 rpm, or 45,000 rpm, and so on. The rotation speed is not limited to the above values, and other values within the range are equivalently applicable. In an embodiment, the rotation speed is in a range of 3000 rpm to 30,000 rpm.

In an embodiment, the rotation speed of the second mixing is adapted to a size of a material container and a size of a dispersing cutter. It is to be satisfied that a linear velocity at a middle position of a blade of the cutter is greater than 30 m/s.

In an embodiment, a solute of the second binder solution is the second binder. The second binder includes any one or a combination of at least two of: polyvinylpyrrolidone (PVP) powder, polyacrylic acid (PAA) powder, polyethylene glycol (PEG) powder, sodium carboxymethyl cellulose (CMC) powder, polyvinylidene difluoride (PVDF) powder, PVP emulsion, PAA emulsion, PEG emulsion, CMC emulsion, or PVDF emulsion. Typical but non-limited examples of the combination are: a combination of the PVP powder and the PAA powder, a combination of the PEG powder and the CMC powder, a combination of the PVP emulsion and the PAA emulsion, a combination of the PEG emulsion and the CMC emulsion, or a combination of the PVDF emulsion and the PAA powder, and so on.

In an embodiment, a solvent used for the second binder solution includes any one or a combination of at least two of: deionized water, N-methylpyrrolidone, a volatile alcohol solvent, or a volatile silicone oil solvent. Typical but non-limited examples of the combination are: a combination of the deionized water and the volatile alcohol solvent; or a combination of the N-methylpyrrolidone and the volatile silicone oil solvent.

The purpose of using the second binder solution in the present disclosure is to enable the second binder to be better dispersed and dissolved, such that macromolecular chains can be stretched. A proper type of the second binder may improve quality of the electrode sheet, a first charge-discharge efficiency of a battery, and other electrochemical properties.

In an embodiment, a mass fraction of the second binder in the second binder solution is in a range of 1% to 40%. The mass fraction may be: 1%, 5%, 10%, 15%, 20%, 25%, 30%, 35%, or 40%, and so on. The mass fraction is not limited to the above values, and other values within the range are equivalently applicable.

In an embodiment, a rotation speed of the third mixing is in a range of 15 rpm to 30 rpm. The rotation speed may be 15 rpm, 18 rpm, 20 rpm, 22 rpm, 24 rpm, 26 rpm, 28 rpm, or 30 rpm, and so on. The rotation speed is not limited to the above values, and other values within the range are equivalently applicable.

In an embodiment, a solid content in a material obtained after the third mixing is in a range of 72% to 95%. The solid content may be: 72%, 74%, 76%, 78%, 80%, 82%, 84%, 86%, 88%, 90%, 92%, 94%, or 95% and so on. The solid content is not limited to the above values, and other values within the range are equivalently applicable.

In an embodiment, after the third mixing, a drying process is performed. In an embodiment, a temperature of the drying process is in a range of 45°C to 150°C. The temperature may be 45°C, 50°C, 60°C, 70°C, 80°C, 90°C, 100°C, 110°C, 120°C, 130°C, 140°C, or 150°C, and so on. The temperature of the drying process is not limited to the above values, and other values within the range are equivalently applicable.

In an embodiment, a time length of the drying process is in a range of 0.5h to 3h. The time length may be 0.5h, 1h, 1.5h, 2h, 2.5h, or 3h, and so on. The time length of the drying process is not limited to the above values, and other values within the range are equivalently applicable.

In an embodiment, after the drying process, the material is naturally after air dried.

In an embodiment, a device for the drying process may be a blowing drier. The blast oven is configured to dry the powder and to increase fibrillation.

In an embodiment, a time length for the fourth mixing is in a range of 0.5 min to 20 min. The time length may be 0.5 min, 1 min, 2 min, 4 min, 6 min, 8 min, 10 min, 12 min, 14 min, 16 min, 18 min, or 20 min, and so on. The time length of the fourth mixing is not limited to the above values, and other values within the range are equivalently applicable.

In an embodiment, a rotation speed of the fourth mixing is in a range of 1500 rpm to 45000 rpm. The rotation speed may be 1500 rpm, 3000 rpm, 4000 rpm, 5000 rpm, 10000 rpm, 15000 rpm, 20000 rpm, 25000 rpm, 30000 rpm, 35000 rpm, 40,000 rpm or 45,000 rpm, and so on. The rotation speed of the fourth mixing is not limited to the above values, and other values within the range are equivalently applicable. In an embodiment, the rotation speed of the fourth mixing is in a range of 3000 rpm to 30,000 rpm.

In an embodiment, the rotation speed of the fourth mixing is adapted to a size of a material cylinder and a size of a dispersing cutter. A linear velocity at a middle position of a blade of the dispersing cutter is greater than 30 m/s.

In an embodiment, a high-speed cutting and shearing method is performed for the fourth mixing, and a super fluffy soft powder is obtained after the fourth mixing.

In an embodiment, a temperature of the heating treatment is in a range of 60°C to 120°C. The temperature may be 60°C, 70°C, 80°C, 90°C, 100°C, 110°C, or 120°C, and so on. The temperature is not limited to the above values, and other values within the range are equivalently applicable.

In an embodiment, the powder obtained after the fourth mixing is heated, and the heated powder has an obvious spiderweb-typed filaments. Most of the binder is highly fibrillated.

The fibrillated fluffy powder obtained by the method of the present disclosure has better film-forming performance and higher strength. The strength can reach 0.45 MPa. The method of manufacturing the fibrillated fluffy powder of the present disclosure can be performed simply and easily, and fibrillation of the powder is improved. The manufacturing process of the fibrillated fluffy powder of the present disclosure has low requirements on the devices, and worn and torn to the devices and energy consumption of the devices are reduced.

The present disclosure further provides a fibrillated fluffy powder, which is obtained by performing the method of manufacturing the fibrillated fluffy powder as described above.

The present disclosure further provide a lithium-ion battery. The lithium-ion battery includes an electrode film, the electrode film is obtained by performing the method of manufacturing the fibrillated fluffy powder as described above.

### Embodiment 1

The present disclosure provides a method of manufacturing the fibrillated fluffy powder. Raw materials for the method are: artificial graphite, conductive carbon black, PTFE powder, and PVP powder in deionized water. A mass ratio of the artificial graphite, the conductive carbon black, the PTFE powder, and the PVP powder in the deionized water is: 95:1:2.5:1.5. The method of manufacturing the fibrillated fluffy powder includes following operations.
(1) The first mixing is performed on the artificial graphite and the conductive carbon black to obtain the first mixture. The rotation speed of the cutter for the first mixing is 1200 rpm, and the rotation speed of the scraper is 220 rpm, and the first mixing is performed for 15 min.
(2) The polytetrafluoroethylene dispersion resin is added to the first mixture described in the operation (1), and the second mixing is performed to obtain the second mixture. The second mixing is performed at the rotation speed of 25000rpm for 15min.
(3) The second binder solution, in which a mass fraction of 20% of PVP powder (as the second binder) in the deionized water, is added to the second mixture in the operation (2), and the third mixing is performed to obtain the third mixture. The rotation speed of the third mixing is 25 rpm, and the solid content in the material after the third mixing is 86%. The material after the third mixing is dried by a blowing drier at a temperature of 85 °C for 30min.
(4) The fourth mixing is performed on third mixture obtained in the operation (3) at a rotation speed of 20,000 rpm for 10min, and the material after the fourth mixing is heated at 85 °C, such that the fibrillated fluffy powder is obtained.

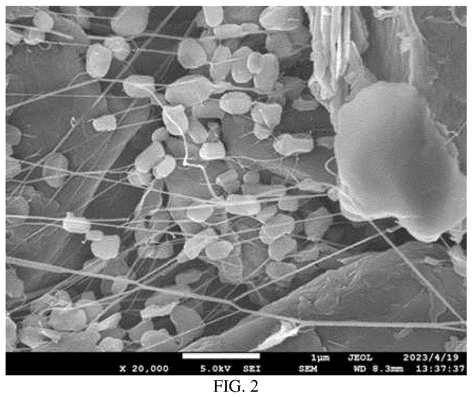

A SEM image of the fibrillated fluffy powder obtained in the present embodiment is shown in FIG. 2.

### Embodiment 2

The present disclosure provides a method of manufacturing the fibrillated fluffy powder. Raw materials for the method are: natural graphite, kochine black, polytetrafluoroethylene dispersion resin, and PAA powder in deionized water. A mass ratio of the natural graphite, the kochine black, the polytetrafluoroethylene dispersion resin, and the PAA powder in the deionized water is: 97.5:0.1:0.9:1.5. The method of manufacturing the fibrillated fluffy powder includes following operations.
(1) The first mixing is performed on the natural graphite and the kochine black to obtain the first mixture. The rotation speed of the cutter for the first mixing is 150 rpm, and the rotation speed of the scraper is 50 rpm, and the first mixing is performed for 60 min.
(2) The polytetrafluoroethylene dispersion resin is added to the first mixture described in the operation (1), and the second mixing is performed to obtain the second mixture. The second mixing is performed at the rotation speed of 1500rpm for 20min.
(3) A PAA powder-ethanol solution, in which a mass fraction of the PAA powder is 1%, is added to the second mixture in the operation (2), and the third mixing is performed to obtain the third mixture. The rotation speed of the third mixing is 25 rpm, and the solid content in the material after the third mixing is 72%. The material after the third mixing is dried by a blowing drier at a temperature of 45 °C for 3h.
(4) The fourth mixing is performed on third mixture obtained in the operation (3) at a rotation speed of 1500 rpm for 20min, and the material after the fourth mixing is heated at 60 °C, such that the fibrillated fluffy powder is obtained.

### Embodiment 3

The present disclosure provides a method of manufacturing the fibrillated fluffy powder. Raw materials for the method are: LiCoO₃, single-walled carbon nanotubes, polytetrafluoroethylene dispersion resin, and PVDF powder- N-methylpyrrolidone solution. A mass ratio of the LiCoO₃, the single-walled carbon nanotubes, the polytetrafluoroethylene dispersion resin, and the PVDF powder in the solution is: 92.5:1:5:1.5. The method of manufacturing the fibrillated fluffy powder includes following operations.
(1) The first mixing is performed on the LiCoO₃ and the single-walled carbon nanotubes to obtain the first mixture. The rotation speed of the cutter for the first mixing is 3000 rpm, and the rotation speed of the scraper is 300 rpm, and the first mixing is performed for 1 min.
(2) The polytetrafluoroethylene dispersion resin is added to the first mixture described in the operation (1), and the second mixing is performed to obtain the second mixture. The second mixing is performed at the rotation speed of 45000rpm for 1min.
(3) A PVDF powder- N-methylpyrrolidone solution, in which a mass fraction of the PVDF powder is 40%, is added to the second mixture in the operation (2), and the third mixing is performed to obtain the third mixture. The rotation speed of the third mixing is 30 rpm, and the solid content in the material after the third mixing is 95%. The material after the third mixing is dried by a blowing drier at a temperature of 150°C for 30min.
(4) The fourth mixing is performed on third mixture obtained in the operation (3) at a rotation speed of 45000 rpm for 0.5min, and the material after the fourth mixing is heated at 120 °C, such that the fibrillated fluffy powder is obtained.

### Embodiment 4

In the present embodiment, the PVP powder in the operation (3) is replaced with SBR emulsion. The other conditions are the same as those in the embodiment 1.

### Embodiment 5

In the present embodiment, the 20% PVP powder-deionized water in the operation (3) is replaced by PVP powder. The other conditions are the same as those in the embodiment 1.

### Embodiment 6

In the present embodiment, the temperature of the heating process in the operation (4) is 30°C. The other conditions are the same as those in the embodiment 1.

### Embodiment 7

In the present embodiment, the temperature of the heating process in the operation (4) is 140°C. The other conditions are the same as those in the embodiment 1.

### Control example 1

The operation (2) is not performed, and the other conditions are the same as those in the embodiment 1.

### Control example 2

The operation (3) is not performed, and the other conditions are the same as those in the embodiment 1.

### Control example 3

The operation (4) is not performed, and the other conditions are the same as those in the embodiment 1.

The fibrillated fluffy powder obtained in each of the Embodiments 1-2, Embodiments 4-7 and Control examples 1-3 is used to form a negative-electrode film. The fibrillated fluffy powder obtained in the Embodiment 3 is used to form a positive-electrode film. A method of using the fibrillated fluffy powder obtained in each of the Embodiments 1-2, Embodiments 4-7 and Control examples 1-3 to form the respective negative-electrode film includes: fibrillating the powder, and calendering the fibrillated powder to form the film.

A strength test is performed on the positive-electrode film or the negative-electrode film obtained in each of the Embodiments 1-7 and the Control examples 1-3. A method for testing a tensile strength is as follows. A universal tensile strength machine (a gravimeter having a range of up to 50N, cutting a sample into a standard size of: length*width=100mm*20mm, having a marking distance of 50mm) is used to perform the test for the strength of the electrode film.

Results of the strength test of the electrode film obtained from each of the Embodiments 1-7 and the Control examples 1-3 are shown in Table 1.

**Table 1**

| | strength of electrode film /MPa |
|---|---|
| Embodiment 1 | 0.45 |
| Embodiment 2 | 0.35 |
| Embodiment 3 | 0.4 |
| Embodiment 4 | 0.2 |
| Embodiment 5 | 0.2 |
| Embodiment 6 | 0.3 |
| Embodiment 7 | 0.35 |
| Control example 1 | Unable to form a film |
| Control example 2 | 0.15 |
| Control example 3 | 0.1 |

As shown in the above table, fibrillation of the powder is dramatically enhanced after performing the second fibrillation. By compounding other binders, the fibrillation is significantly more obvious, and the strength of the formed film is increased.

According to the Embodiment 1 and the Embodiment 4, by replacing the PVP powder with the styrene-butadiene rubber (SBR) emulsion in the operation (3), the film-forming performance of the powder after being fibrillated is reduced, indicating that the strength of the film is related to a type of the compounding binder. Fibrillation of the powder cannot be increased by directly adding the SBR emulsion, and the type of the compounding binder has a certain effect on the fibrillation performance.

According to the Embodiment 1 and the Embodiment 5, the PVP powder - deionized water, in which the mass fraction of the PVP powder is 20%, in the step (3) is replaced by the PVP powder, and the results indicate that the compounding binder is dispersed based on the solution in order to achieve the effect of the secondary fibrillation. Directly adding the dry powder does not increase the fibrillation performance. That is, improvement in the strength of the film is directly correlated with the process of the secondary fibrillation.

According to the Embodiment 1 and the Control examples 6-7, the temperature of the heating treatment in the operation (4) being excessively high or excessively low is unfavorable to processing the film, and the strength of the film manufactured therefrom is less than the strength of the film manufactured by being heated at the proper temperature.

According to the Embodiment 1 and the Control examples 1-3, when other powder manufacturing methods are performed, strengths of the obtained films are less than strengths of the films manufactured by the dry process of the present disclosure.

## Claims

1. A method of manufacturing fibrillated fluffy powder, the method being **characterized by** comprising:
performing (S110) a first mixing to mix an active material and a conductive agent to obtain a first mixture;
adding (S 120)a first binder to the first mixture, performing a second mixing on the first binder and the first mixture to obtain a second mixture;
adding (S130) a second binder solution to the second mixture, performing a third mixing on the second binder solution and the second mixture to obtain a third mixture; and
performing (S140) a fourth mixing on the third mixture, heating the mixed third mixture to obtain the fibrillated fluffy powder.

2. The method according to claim 1, wherein,
a mass ratio of the active material, the conductive agent, the first binder, and a second binder in the second binder solution is (92.5 to 97.5):(0.1 to 1):(0.9 to 5):1.5;
preferably, the active material comprises a positive-electrode active material or a negative-electrode active material;
preferably, the positive-electrode active material comprises any one or a combination of at least two of: LFP, NCM and LiCoO₃;
preferably, the negative-electrode active material comprises any one or a combination of at least two of: graphite and a silicon-based material;
preferably, the graphite comprises any one or a combination of at least two of: natural graphite and artificial graphite;
preferably, the silicon-based material comprises any one or a combination of at least two of: a silicon-oxygen material and a silicon-carbon material;
preferably, the conductive agent comprises any one or a combination of at least two of: conductive carbon black, acetylene black, kochine black, graphite, carbon nanofibers, single-walled carbon nanotubes, multi-walled carbon nanotubes, and graphene.

3. The method according to claim 1 or claim 2, wherein, the first mixing is performed in a granulator; a rotation speed of a cutter of the granulator is in a range of 150 rpm to 3000 rpm; preferably, a rotation speed of the cutter is in a range of 800 rpm to 1500 rpm;
preferably, the first mixing is performed in the granulator; a rotation speed of a scraper of the granulator is in a range of 50 rpm to 300 rpm; preferably, the rotation speed of the scraper is in a range of 150 rpm to 300 rpm;
preferably, a time length of the first mixing is in a range of 1min to 60 min; preferably, the time length of the first mixing is in a range of 10min to 20 min.

4. The method according to any one of claims 1 to 3, wherein, the first binder comprises polytetrafluoroethylene dispersion resin.

5. The method according to any one of claims 1 to 4, wherein, a time length of the second mixing is in a range of 1 min to 20 min;
preferably, the second mixing is performed in a mixer;
preferably, a rotation speed of the second mixing is in a range of 1500 rpm to 45000 rpm;
preferably, the rotation speed of the second mixing is in a range of 3000 rpm to 30000 rpm.

6. The method according to any one of claims 1 to 5, wherein, a solute of the second binder solution is a second binder; the second binder comprises any one or a combination of at least two of: polyvinylpyrrolidone (PVP) powder, polyacrylic acid (PAA) powder, polyethylene glycol (PEG) powder, sodium carboxymethyl cellulose (CMC) powder, polyvinylidene difluoride (PVDF) powder, PVP emulsion, PAA emulsion, PEG emulsion, CMC emulsion, and PVDF emulsion;
preferably, a solvent used for the second binder solution comprises any one or a combination of at least two of: deionized water, N-methylpyrrolidone, a volatile alcohol solvent, and a volatile silicone oil solvent;
preferably, a mass fraction of the second binder in the second binder solution is in a range of 1% to 40%.

7. The method according to claim 5, wherein, a linear velocity at a middle of a blade of a dispersing cutter for performing the second mixing is greater than 30m/s.

8. The method according to any one of claims 1 to 7, wherein, a rotation speed of the third mixing is in a range of 15 rpm to 30 rpm;
preferably, a solid content in a material obtained after the third mixing is in a range of 72% to 95%;
preferably, after the third mixing, a drying process is performed;
preferably, a temperature of the drying process is in a range of 45°C to 150°C; and
preferably, a time length of the drying process is in a range of 0.5h to 3h.

9. The method according to any one of claims 1 to 8, wherein, a time length of the fourth mixing is in a range of 0.5 min to 20 min;
preferably, a rotation speed of the fourth mixing is in a range of 1500 rpm to 45000 rpm;
preferably, a temperature of the heating is in a range of 60°C to 120°C.

10. The method according to claim 9, wherein, a linear velocity at a middle of a blade of a dispersing cutter for performing the fourth mixing is greater than 30m/s.

11. Fibrillated fluffy powder, wherein, the fibrillated fluffy powder is obtained by performing the method of manufacturing the fibrillated fluffy powder according to any one of claims 1 to 10.

12. A lithium-ion battery, comprising: an electrode film, wherein, the electrode film is made of the fibrillated fluffy powder according to claim 11.
